# EUROPEAN PATENT SPECIFICATION

(11) **EP 4 448 970 B1**
(45) Date of publication and mention of the grant of the patent: **04.11.2026**
(21) Application number: 22818498.2
(22) Date of filing: 01.12.2022
(51) Int. Cl.: F04B 39/06, F04B 41/06, F04C 29/04, F04D 29/58

(54) **AIR-COOLED PRESSURIZING DEVICE WITH ENERGY RECOVERY FOR COMPRESSING OR PRESSURIZING A FLUID AND PROVIDED WITH AN IMPROVED COOLING**
LUFTGEKÜHLTE DRUCKBEAUFSCHLAGUNGSVORRICHTUNG MIT ENERGIERÜCKGEWINNUNG ZUR KOMPRIMIERUNG ODER DRUCKBEAUFSCHLAGUNG EINES FLUIDS UND MIT VERBESSERTER KÜHLUNG
DISPOSITIF DE MISE SOUS PRESSION REFROIDI PAR AIR À RÉCUPÉRATION D'ÉNERGIE POUR COMPRIMER OU METTRE SOUS PRESSION UN FLUIDE ET DOTÉ D'UN REFROIDISSEMENT AMÉLIORÉ

(30) Priority: 15.12.2021 BE 202105989
(43) Date of publication of application: 23.10.2024
(73) Proprietor: Atlas Copco Airpower, Naamloze Vennootschap, 2610 Wilrijk (BE)
(72) Inventor: DE BONTRIDDER, Thomas Willem I., 2610 Wilrijk (BE); HELLEMANS, Geert, 2610 Wilrijk (BE)
(86) International application number: PCT/IB2022/061644
(87) International publication number: WO 2023/111745

(56) References cited:
- EP-A1- 2 610 495
- DE-A1- 102019 102 387
- DE-B3- 102006 029 888

## Description

### Technical Field

The present invention relates to a pressurizing device, typically a compressor, for compressing or pressurizing a fluid, typically a gaseous fluid such as air or another gas, such as carbon dioxide, nitrogen, argon, helium or hydrogen. It is however not excluded from the invention that the pressurizing device is used for compressing or pressurizing a more dense fluid, such as water vapor or the like.

Furthermore, pressurizing devices of the invention comprise a housing, a fluid duct for guiding the fluid through the pressurizing device from a fluid duct inlet to a fluid duct outlet and one or more pressurizing stages each comprising a pressurizing element for pressurizing the fluid, which are included in the fluid duct and are forming a part of the fluid duct.

The pressurizing elements are typically connected in series, but other configurations are not excluded from the invention.

Typically, uncompressed ambient air is taken in at the fluid duct inlet which is transformed through the different pressurizing stages in the pressurizing device into compressed air which is supplied at the fluid duct outlet for use by a user of compressed or pressurized air (or pressurized fluid in a more general case).

More specifically, the invention relates to such a kind of pressurizing devices which comprise means for cooling, which are at least partly air-cooling means. To that end, a pressurizing device to which the invention is related comprises a device for forcing an airflow in an air channel through the housing from an air channel inlet to an air channel outlet. Air-cooled pressurized devices are typically used when no external cooling system for cooling of the pressurizing device is available.

The kind of pressurizing devices to which the invention is related, are also provided with elements for recovering energy, in particular for recovering heat accumulated in the pressurized or compressed fluid during operation of the pressurizing device.

### Background

When compressing air or another fluid, energy is converted into heat, and, as a consequence, hot compressed or pressurized fluid is generated. The heat can be recuperated by cooling the pressurized or compressed fluid with a liquid such as water. In that way, hot liquid, typically hot water, becomes available which can be used for other processes (general heating etc.) and the energy of the compressing and pressurizing process is at least partly recovered. This is called a pressurizing device or compressor with energy recovery (ER).

Water-cooled or liquid-cooled pressurizing devices typically use a liquid coolant from an external unit to cool the compressed or pressurized fluid and any other substances present during the compression process, such as oil for lubricating bearings, pumps, gearing and other parts of the pressurizing device. Such water-cooled or liquid-cooled pressurizing devices are obviously also very suitable for applying energy recovery, since a liquid is available in which heat can temporarily be stored and from which liquid the heat can be easily transferred to a heat consumer.

In applications with pressurizing devices where no such external cooling liquid system is available on site, cooling has to be obtained by other means. In such a case, typically air cooling is applied and the heat which is transferred to the air is usually lost to the atmosphere. However, also in these applications with air-cooling a certain level of energy recovery is often desired.

Although there is some similarity between a cooling system and an energy recovery system in that they both absorb some energy from the pressurizing device and/or the pressurized or compressed fluid and they both transfer this heat to another location, it is important to notice that a cooling system and an energy recovery system also have some major differences.

A cooling system for example must provide sufficient cooling to the pressurizing device under all circumstances, for example with the intention to avoid failure of the pressurizing device. Furthermore, a cooling system must usually ensure that sufficiently low temperatures are reached in certain parts of the system no matter how high the temperatures rise elsewhere. These temperatures depend for example on the flow rate through the pressurizing device or the required output pressure of pressurized fluid delivered by the pressurizing device. In other words the concerned temperatures in the pressurizing device can vary a lot dependent on the operational conditions of the pressurizing device.

On the other hand, an energy recovering system delivers energy to an external energy or heat consumer. Such a heat consumer usually demands a liquid having a sufficiently high temperature at the input so to be useful in a practical application, such as in a central heating system. An energy recovery system is often also not continuously in use or has a fluctuating energy consumption, which is independent from the operation of the pressurizing device and which is not directly linked to the safe and efficient functioning of the pressurizing device. In an energy recovery system the fluctuation of energy consumption is entirely dependent on the requirements and demands from the energy or heat consumer.

According to the state of the art, an air-cooled pressurizing device with energy recovery can be obtained by integrating a closed-loop liquid-cooling circuit in the pressurizing device. For circulating the liquid in the closed-loop liquid-cooling circuit, the liquid-cooling circuit comprises a device for forcing a liquid flow, typically a water pump. The liquid in the liquid-cooling circuit is a heat transfer liquid, which is typically water, but it is not excluded from the invention to use other heat transfer liquids in the liquid-cooling circuit, such as oil, synthetic hydrocarbon or silicone based fluids, molten salts or molten metal, or any other suitable liquid. Also other corresponding suitable devices for forcing a liquid flow in the liquid-cooling circuit can be used which are not necessarily water pumps.

On the one hand, energy recovery is realized by temporarily storing heat, which is accumulated in the pressurized fluid during pressurization or compression, in the liquid of the liquid-cooling circuit and by transferring this heat to a heat consumer.

Heat accumulated in the pressurized fluid during compression is picked-up into the liquid of the liquid-cooling circuit by means of liquid-fluid heat exchangers which are included in the liquid-cooling circuit. Typically, a number of liquid-fluid heat exchangers is included in the liquid-cooling circuit which corresponds to the number of pressurizing stages in the pressurizing device. These liquid-fluid heat exchangers are positioned in a part of the fluid duct which is downstream (in the fluid flow) of each concerned pressurizing element. In that way, heat from the pressurized fluid in the concerned part of the fluid duct is transferred to the liquid in the corresponding part of the liquid-cooling circuit. The liquid-fluid heat exchangers are usually connected in series and the flow of liquid in the liquid-cooling circuit is preferably in counterflow with the flow of fluid in the fluid duct.

For supplying the recovered heat, which is temporally stored in the liquid of the liquid-cooling circuit, to a heat consumer, a liquid-liquid heat exchanger is also included in the liquid-cooling circuit. This liquid-liquid heat exchanger is intended for transferring heat from the liquid in the liquid-cooling circuit to another liquid circuit, typically also a water circuit, of the heat consumer. Such a heat consumer can for example be a heating system for warming radiators in offices of a factory, for heating substances in a production process or can be any other kind of heat consumer. This liquid-liquid heat exchanger is positioned upstream (in the liquid flow) of the series of liquid-fluid heat exchangers.

On the other hand, the required cooling-capacity is ensured in all circumstances by an air-cooling which consists of a large liquid to air heat exchanger which is also included in the liquid-cooling circuit.

In the housing of the pressurizing device an air channel is provided and a device for forcing an airflow, typically a fan or ventilator, is installed in the air channel. In that way an airflow can be created through the housing from an air channel inlet to an air channel outlet. The liquid-air heat exchanger is located in the air channel for transfer of heat from the liquid in the liquid-cooling circuit to air forced through the air channel by the device for forcing an airflow.

The liquid-air heat exchanger is placed downstream (in the liquid flow) of the afore-mentioned liquid-liquid heat exchanger for energy recovery and is intended as an additional liquid cooler for additionally cooling the liquid in the closed-loop liquid-cooling circuit before it is flowing back to the liquid-fluid heat exchangers behind the pressurizing elements for further absorbing of heat from the pressurized fluid.

Indeed, for an efficient heat transfer in the liquid-fluid heat exchangers, the difference between the temperature of the pressurized fluid in the fluid duct and the temperature of the liquid of the liquid-cooling circuit, must be sufficiently high.

What's more, excess heat which is not released by transfer to the heat consumer, for example due to a lack of heat consumption by the heat consumer, is released in the air channel by means of the liquid-air exchanger and this in all circumstances. In that way, a safe functioning of the pressurizing device is ensured and the transfer of heat from the pressurized or compressed fluid to the liquid of the liquid-cooling circuit is optimized.

The described known configurations of an air-cooled pressurizing device with energy recovery have however some disadvantages.

An important disadvantage of such a known configuration of an air-cooled pressurizing device with energy recovery is that the outlet temperature of the pressurizing device is still high as compared to the outlet temperature of an air cooled compressor which is not provided with energy recovery means and which is thus not provided with an integrated liquid-cooling circuit for exchange of heat with an external heat consumer.

The reason is that the efficiency of the liquid-fluid heat exchangers used in an air-cooled pressurizing device with energy recovery is low to very low, because the flow rate of the liquid through the liquid-cooling circuit has to be kept low in order to get a sufficiently high liquid temperature, which is useful for the heat consumer. It is only when a useful source of heat can be delivered to the heat consumer that energy recovery can take place in practice.

With a low flow rate in the liquid-cooling circuit, the liquid stays a relatively long time in the liquid-fluid heat exchangers and the temperature has time to increase to a sufficiently high level. On the other hand, with a given flow rate of fluid through the fluid duct of the pressurizing device, a certain volume of fluid transfers less heat to the liquid in the liquid-cooling circuit in a situation wherein the liquid is flowing at a low flow rate, than in a situation wherein the liquid is flowing at a higher flow rate. Indeed, the amount of liquid to which such a volume of fluid is exposed during flow through a concerned liquid-fluid heat exchanger is relatively smaller and less cool in the low flow rate situation of the liquid than in the high flow rate situation.

As a consequence, the temperature of the fluid at the outlet of the pressurizing device (after the concerned heat exchanger) is relatively high and the approach temperature, which is the difference between the water/liquid temperature at the inlet of the water/liquid side of the heat exchanger and the temperature of the fluid at the outlet of the fluid side of the heat exchanger, is relatively high.

Furthermore, in such a known configuration of an air-cooled pressurizing device with energy recovery, two heat exchanges are actually taking place. A first exchange of heat takes place in the liquid-air heat exchanger which is installed in the air channel and in which ambient air is used to cool coolant liquid in the liquid-cooling circuit. Subsequently, a second exchange of heat takes place in the afore-described liquid-fluid heat exchangers in which coolant liquid in the liquid-cooling circuit takes heat from the compressed fluid in the fluid duct of the pressurizing device. As a consequence, the difference between the ambient air temperature (cooling air) and the compressed or pressurized fluid at the fluid duct outlet of the pressurizing device is high. Indeed, the total approach temperature is the sum of the approach temperatures of the two afore-described heat exchanges.

A disadvantage of having a high temperature of the compressed or pressurized fluid at the fluid duct outlet of the pressurizing device is that the compressed or pressurized fluid has also a high humidity load. Compressed or pressurized fluid with a high humidity content is usually not acceptable for most consumers of compressed or pressurized fluid, for example due to its corrosive characteristics.

A further negative consequence of the high temperature of the compressed or pressurized fluid at the fluid duct outlet and its high humidity is therefore that additional measures have to be taken in order to dry the compressed or pressurized fluid.

A possible solution for reducing the high humidity content in the outgoing compressed or pressurized fluid consists in adding an additional, external aftercooler after the pressurizing device, combined with an external water separator or an external dryer, which are specifically designed for this purpose. A disadvantage of such a solution is that the size needed for the complete installation increases significantly. A dryer which is suitable for taking away the excess humidity must for example be exceedingly bigger than the standard dryers which are usually applied with similar known pressurizing devices. Another disadvantage of this kind of solutions is that a much higher cost is involved.

The document EP2610495 A1 discloses an air-cooled pressurizing device with energy recovery, wherein the pressurizing elements are incorporated in a second compartment along with a liquid-air heat exchanger and a fluid-air heat exchanger.

### Summary of the invention

It is an aim of the invention to overcome one or more of the afore-mentioned problems and/or possibly still other problems.

It is particularly a goal of the invention to provide an air-cooled pressurizing device with energy recovery wherein the fluid temperature of the fluid which is compressed or pressurized in the pressurizing device measured at the fluid duct outlet of the pressurizing device is improved, i.e., is lowered, compared to the outlet fluid temperature measured in similar pressurizing devices known according to the present state of the art.

Still another objective of the present invention is to provide an air-cooled pressurizing device with energy recovery wherein the compressed or pressurized fluid at the fluid duct outlet of the pressurizing device has a very much reduced humidity content.

It is also a goal of the invention to increase the controllability of the fluid outlet temperature in a flexible manner.

A further aim of the invention is to obtain the afore-mentioned objectives of lowered fluid outlet temperature and reduced humidity content of the outgoing pressurized or compressed fluid, by adding only limited additional means, compared to known pressurizing devices, which are integrated in the pressurizing device and/or by applying only relative compact modifications to known pressurizing devices of a similar type. In particular, it is an aim of the invention to realize those objectives without the need for adding additional external devices to the pressurizing device.

Finally, it is also an aim of the invention to develop an efficient air-cooled pressurizing device with energy recovery which is limited in size, which is reliable and which is cost-effective.

To this end, the present invention relates to an air-cooled pressurizing device with energy recovery according to claim 1.

A great advantage of such an air-cooled pressurizing device with energy recovery according to the invention is that it comprises an additional aftercooler for cooling the compressed or pressurized fluid in the form of a separate fluid-air heat exchanger, which is not a part of the liquid-cooling circuit that also serves as an energy recovery system, but which is a separate part of the air-cooling of the pressurizing device installed in the air channel.

With this separate fluid-air heat exchanger the compressed or pressurized fluid is cooled in a direct way by means of a forced airflow through the air channel, which cooling is not influenced or almost not influenced by the energy recovering part of the liquid-cooling circuit. The concerned cooling is also more effective, since only one heat exchange takes place and it is not an indirect cooling consisting of at least two heat exchanges, as is the case in the closed-loop liquid-cooling circuit. Indeed, in the liquid-cooling circuit a first heat exchange takes place in the liquid-fluid heat exchangers for absorbing the heat from the compressed or pressurized fluid in the liquid coolant and, apart from the energy recovery, at least a second heat exchange takes place in the liquid-air heat exchanger in the air channel for discharging remaining excess heat from the liquid to the air and thus cooling the liquid.

The air-cooling of the compressed or pressurized fluid can also be controlled within certain limits in a more direct way by increasing or decreasing the airflow through the air channel by means of the device for forcing an airflow in the air channel.

In that way, the problems described before which exist at present in the known air-cooled pressurizing devices with energy recovery are solved. First of all, pressurized or compressed fluid can be delivered at the fluid duct outlet of the pressurizing device having a sufficiently low fluid temperature which is suitable for supply to a consumer of pressurized or compressed fluid. Furthermore, cooled pressurized or compressed fluid cannot contain a high degree of humidity, since the saturation humidity is much lower at low temperatures.

Another advantage of such an air-cooled pressurizing device with energy recovery according to the invention is that the pressurizing device is still very compact, since all the components are mainly integrated in a housing which is not substantially different from the housing of known similar pressurizing devices.

Still another important advantage of such an air-cooled pressurizing device with energy recovery according to the invention is that the additional aftercooler of the compressed or pressurized fluid in the form of a fluid-air heat exchanger uses the same cooling air flow as the liquid-air heat exchanger of the liquid-cooling circuit, which serves as a kind of backup heat exchanger when not sufficient heat is taken by the heat consumer in the energy recovering part of the liquid-cooling circuit.

In that way, it is possible to provide the cooling airflow for both heat exchangers by means of a single device for forcing an airflow in the air channel. This device for forcing an airflow in the air channel can for example be provided with large fans which provide the flow for both the additional aftercooler for cooling the compressed or pressurized fluid and the liquid-air backup heat exchanger of the liquid-cooling circuit.

Another advantage of such an air-cooled pressurizing device with energy recovery according to the invention is that a single air channel with its air channel inlet and its air channel outlet can be applied for supplying cooling air to both heat exchangers of the air-cooling part of the pressurizing device.

Furthermore, it is also advantageous that the air flow path for the cooling air flow is part of the design of the pressurizing device, so that no additional measures have to be taken on site for additional fluid-cooling or fluid-drying and so on, which simplifies a lot the installation of such a pressurizing device.

In a preferred embodiment of an air-cooled pressurizing device according to the invention, the pressurizing device is a compressor device comprising one or more pressurizing elements which are compressor elements.

A pressurizing device which is executed as a compressor or compressor device is of course the most obvious choice for compressing or pressurizing a fluid.

In another preferred embodiment of an air-cooled pressurizing device according to the invention the device for forcing an airflow is a single fan or ventilator, the liquid in the liquid-cooling circuit is water and the device for forcing a flow for circulating the liquid in the closed-loop liquid-cooling circuit is a water pump.

Again the choices made for realizing such an embodiment of an air-cooled pressurizing device are of a kind which are practical, relatively cheap and universally applied, but of course other choices can be made in function of particular needs without departing from the invention.

According to the invention the housing of the pressurizing device comprises mainly two compartments, a first compartment in which the pressurizing elements, the liquid-fluid heat exchanger(s) and the liquid-liquid exchanger are incorporated and a second compartment which is forming the air channel in which the liquid-air heat exchanger and the fluid-air heat exchanger are installed.

A great advantage of such an embodiment of a pressurizing device in accordance with the invention is that air-cooling components of the device which exchange heat with air coming from the surroundings of the device are put together in a second compartment of the housing, which is clearly separated from a first compartment of the housing, so that a very structured design is obtained and the size of the pressurizing device is still kept compact, even when it contains many different components.

In a possible embodiment of an air-cooled pressurizing device with energy recovery of the invention a dryer for drying pressurized fluid is incorporated in said first compartment, which is drying pressurized fluid in a part of the fluid duct outlet part that is downstream (in the fluid flow) of the fluid-air heat exchanger.

With such an embodiment of a pressurizing device in accordance with the invention it is possible to provide compressed or pressurized fluid to an external consumer which is of very high quality in that high pressure needs, and requirements of low outlet temperature and very low humidity content of the compressed or pressurized fluid are easily met and this with a single pressurizing device in which all needed components are integrated.

### Brief Description of the Drawings

The invention will further be illustrated with references to the drawings, wherein:
- figure 1 is a schematic drawing of a pressurizing device in accordance with the invention; and,
- figures 2 to 8 in a similar way as in figure 1 illustrate other embodiments of a pressurizing device in accordance with the invention.

### Detailed Description of Embodiment(s)

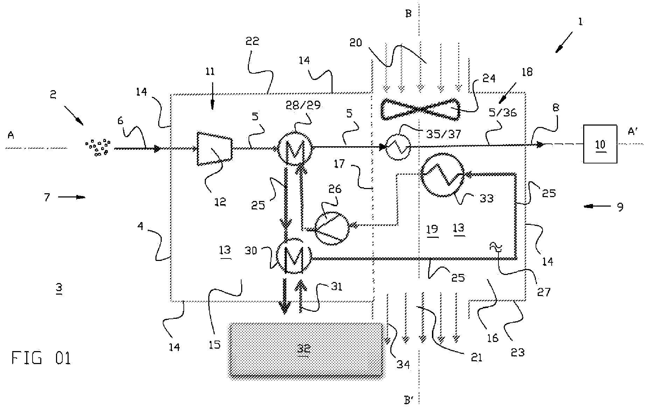

Figure 1 illustrates a first possible embodiment of an air-cooled pressurizing device 1 with energy recovery in accordance with the invention which is intended for compressing or pressurizing a fluid 2, which fluid 2 is in this case air taken from the surroundings 3 of the pressurizing device 1.

The pressurizing device 1 is provided with a housing 4 in which a fluid duct 5 is mounted for guiding the fluid 2 through the pressurizing device 1. The housing is in the represented case more or less box-shaped. The fluid duct 5 extends from a fluid duct inlet 6, which is in this example of figure 1 located at a first side wall 7 of the housing 4, to a fluid duct outlet 8, which is in this example of figure 1 located at a second side wall 9 of the housing 4, which second side wall 9 is in this case on an opposite side of the housing 4 opposite to the first side wall 7. Of course, in other embodiments the fluid duct 5 can be designed in a completely other way, having a totally different configuration, and the fluid duct inlet 6 and/or the fluid duct outlet 8 can be located in parts of the pressurizing device 1 which differ totally from what is represented in figure 1. In a preferred embodiment of a pressurized device 1 of the invention the fluid duct 5 is extending in a more or less horizontal direction AA'.

The fluid duct outlet 8 is preferably connected to a consumer 10 of compressed or pressurized fluid 2 or to a multitude of such consumers 10 for example by means of a piping network (not represented in figure 1, dashed line).

This first embodiment of a pressurizing device 1 in accordance with the invention which is represented in figure 1 can be considered as being a simple version or even the simplest version of such a pressurizing device 1.

Indeed, the pressurizing device 1 of figure 1 comprises only a single pressurizing stage 11, which comprises a pressurizing element 12 for pressurizing the fluid. The pressurizing device 1 is in this case a compressor device 1 and the pressurizing element 12 is a compressor element 11. The compressor element 12 is included in the fluid duct 5 and it is essentially also forming a part of the fluid duct 5.

The internal space 13 in the housing 4 defined by the outer housing walls 14 of the housing 4 is in the case of figure 1 divided into two separated compartments 15 and 16 by means of an intermediate wall 17. In figure 1 this intermediate wall 17 is represented by a dashed line, but in reality this should be considered as being an intermediate wall 17 which does not allow any airflow between the first compartment 15 and the second compartment 16 in the housing 4.

The fluid duct 5 is passing through both compartments 15 and 16. The compressor element 12 is included in a part of the fluid duct 5 which is located in the first compartment 15 of the housing 4.

The pressurizing device 1 is provided with an air-cooling 18. For that purpose the pressurizing device 1 is provided with an air duct or air channel 19 which extends through the housing 4 from an air channel inlet 20 to an air channel outlet 21.

In the embodiment which is represented in figure 1, the air channel 19 is essentially formed by the second compartment 16 of the internal space 13 in the housing 4, but this is not necessarily the case in other embodiments. The air channel inlet 20 is in this case provided in an outer top wall 22 of the housing 4 and the air channel outlet 21 is provided in an outer bottom wall 23 of the housing 4. As a consequence, the air channel 19 is essentially extending along a vertical direction BB', i.e., in a direction BB' which is traverse to the horizontal direction AA' of the fluid duct 5.

The air-cooling 18 also comprises a device for forcing an airflow 24 in the air channel through the housing 4 from the air channel inlet 20 to the air channel outlet 21. In the represented case this device for forcing an airflow 24 is located at the air channel inlet 20 and is formed by a fan or a ventilator, but in other cases the device 24 can consist of different components comprising multiple fans or ventilators and even still other elements and it can be positioned in other positions for forcing the airflow through the air channel 19.

The air-cooled pressurizing device 1 comprises also elements for recovering energy or heat accumulated in the compressed or pressurized fluid 2 during operation of the pressurizing device.

These elements form part of a separate closed-loop liquid-cooling circuit 25 which is integrated in the pressurizing device 1. In this closed-loop liquid-cooling circuit 25 a device for forcing a liquid flow 26 is provided, which is intended for circulating the liquid 27 in the closed-loop liquid-cooling circuit 25. The liquid 27 is a heat transfer liquid, which is typically water, but according to the invention also other liquids can be used. In the case of figure 1 the liquid 27 is water and the device for forcing a liquid flow 26 is therefore a water pump 26.

According to the invention, in the liquid-cooling circuit 25 a number of liquid-fluid heat exchangers is included, corresponding to the number of pressurizing stages. In the simple case of figure 1 there is only one single pressurizing stage 11 and therefore in this case only a single liquid-fluid heat exchanger 28 is included in the closed-loop liquid-cooling circuit 25, which is placed in or interacting with a part of the fluid duct 5 which is downstream (in the fluid flow) of the single pressurizing element 12. This single liquid-fluid heat exchanger 28 is forming a first aftercooler 29, in which heat from the pressurized fluid 2 in the concerned part of the fluid duct 5 is transferred to the liquid 27 in the concerned part of the liquid-cooling circuit 25. Since the fluid 2 is air and the liquid 27 is water, the liquid-fluid heat exchanger 28 is in this case a water-air heat exchanger 28.

In the liquid-cooling circuit 25 (water-cooling circuit 25 in this case), also a liquid-liquid heat exchanger 30 is included for transfer of heat from the liquid-cooling circuit 25 to a liquid circuit 31 of a heat consumer 32 for recovery of energy. The liquid circuit 31 is for example a heating system wherein hot water is transported to radiators. In that case the liquid-liquid heat exchanger 30 is a water-water heat exchanger 30.

The liquid-fluid heat exchanger 28 and the liquid-liquid heat exchanger 30 are actually the principal elements by which the energy recovery is realized.

The device for forcing a liquid flow 26 or water pump 26 is installed upstream (in the liquid flow) of the liquid-fluid heat exchanger 28 in the liquid-cooling circuit 25.

The pressurizing element 12, the liquid-fluid heat exchanger 28, the liquid-liquid heat exchanger 30 and the device for forcing a liquid flow 26 or water pump 26 are all together installed in the first compartment 15 of the housing 4.

Also a liquid-air heat exchanger 33 is included in the liquid-cooling circuit 25, which forms a part of the air-cooling 18 of the pressurizing device 1. This liquid-air heat exchanger 33 is located in the air channel 19 and is intended for transferring heat from the liquid-cooling circuit 25 to the air 34 flowing in the air channel 19 under the force of the device for forcing an airflow 24. Since the liquid 27 in the liquid-cooling circuit 25 is water 27, the liquid-air heat exchanger 33 is in this case a water-air heat exchanger 33.

So, the liquid-air heat exchanger 33 is installed in the second compartment 16 of the housing 4, which forms the air channel 19, and the closed-loop liquid-cooling circuit 25 is partly passing through the first compartment 15 and partly through the second compartment 16.

Finally, the pressurizing device 1 also comprises a fluid-air heat-exchanger 35 which is forming another part of the air-cooling 18 and which is therefore also provided in the air channel 19. This fluid-air heat-exchanger 35 is intended for transferring heat accumulated in the pressurized or compressed fluid 2 in the fluid duct 5 to the air 34 in the air channel 19. Since the fluid 2 in the fluid duct 5 is air 2, the fluid-air heat-exchanger 35 is in this case an air-air heat exchanger 35.

This fluid-air heat exchanger 35 or air-air heat exchanger 35 is located in a fluid duct outlet part 36 which is a part of the fluid duct 5 downstream (in the fluid flow) of the most downstream pressurizing element, which is in this case the single pressurizing element 12. According to the invention, this fluid duct outlet part 36 is at least partly passing through the air channel 19. In the example of figure 1 the fluid duct outlet part 36 is entirely located in the air channel 19, but in other embodiments this is not necessarily the case, as will be demonstrated further in the text. Furthermore, the fluid-air heat-exchanger 35 is placed in a part 36 of the fluid duct 5 which is also downstream (in the fluid flow) of the liquid-fluid heat exchanger 28, which is a first aftercooler 29, and the fluid-air heat-exchanger 35 is therefore also forming an additional aftercooler 37.

It is clear that the elements which mainly form the air-cooling 18, which are the liquid-air heat exchanger 33 or water-air heat exchanger 33 and the fluid-air heat exchanger 35 or air-air heat exchanger 35, are all together installed in the second compartment 16 of the housing which forms the air channel 19.

In an air-cooled pressurizing device 1 usually there is still another circuit for lubrication (oil) cooling, which is not represented in the figures, since it is not an essential part of the invention. Lubrication or oil is circulating through such a circuit from parts which need to be lubricated, over a filter and a heat-exchanger back to the lubricated parts. In an air-cooled pressurizing device 1 this heat-exchanger is typically an oil-air heat exchanger, which could for example be mounted as an additional cooler in the air channel 19.

The functioning of the air-cooled pressurizing device 1 wit energy recovery is very simple and as follows.

Air 2 or another fluid 2 is sucked at the fluid duct inlet 6 and is guided through the fluid duct 5 to the pressurizing element or compressor element 12, where it is pressurized or compressed. During this process heat is accumulated in the fluid 2, which is partly released in the first aftercooler 29, which is a liquid-fluid heat exchanger 28. The pressurized or compressed fluid 2 is further guided through the fluid duct 5 to the second compartment which forms an air channel 19 in which a flow of air 34 is created by means of a fan 24. In the fluid duct outlet part 36 the pressurized or compressed fluid 2 passes through a second aftercooler 37 for further cooling. This second aftercooler 37 is this time a fluid-air heat exchanger 35. Cool compressed or pressurized fluid 2 is delivered at the fluid duct outlet 8 to a consumer of pressurized or compressed fluid 10.

The part of the heat which is absorbed in the liquid (water) 27 of the first aftercooler 29 can be recuperated. The water pump 26 in the water-cooling circuit 25 drives the water 27 from the first aftercooler 29 to the liquid-liquid heat exchanger 30 or water-water heat exchanger 30, where heat is released to a heat consumer 32. Subsequently, the water 27 is driven from the liquid-liquid heat exchanger 30 through the water-cooling circuit 25 to the second compartment 16, where remaining excess heat in the water 27 is released to the air 34, which is flowing through the air channel 19, in a liquid-air heat exchanger 33 or water-air heat exchanger 33. Cooled water 27 is then driven back to the inlet of the first aftercooler 29, where it can again absorb heat from the pressurized or compressed fluid 2.

It is clear that with such a pressurizing device 1 in accordance with the invention the objectives described in the introduction are realized.

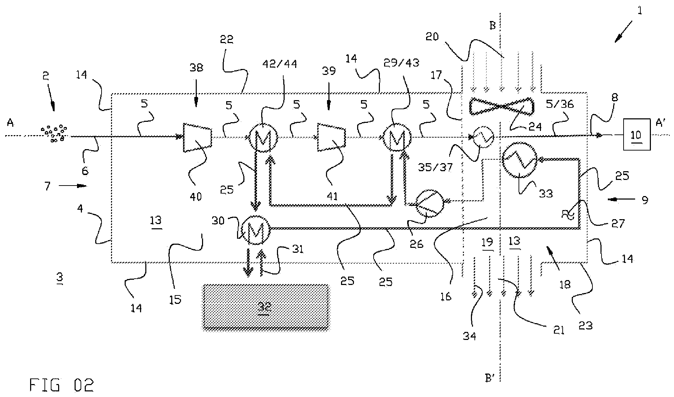

Figure 2 represents another embodiment of an air-cooled pressurizing device 1 with energy recovery in accordance with the invention. This embodiment differs from the former embodiment of figure 1 in that the pressurizing device 1 comprises this time two pressurizing stages 38 and 39. The first pressurizing stage 38 is more near to the fluid duct inlet 6 and is a low pressure stage 38, which comprises a low pressure stage pressurizing element 40. The second pressurizing stage 39 is more near the fluid duct outlet 8 and is a high pressure stage 39, which comprises a high pressure stage pressurizing element 41. These pressurizing elements 40 and 41 are put in series in the fluid duct 5.

As in the preceding embodiment a liquid-cooling circuit 25 is incorporated in the housing 4 of the pressurizing device 1. Since the embodiment of a pressurizing device 1 according to the invention represented in figure 2 comprises two pressurizing stages 38 and 39, there are this time two liquid-fluid heat exchangers 42 and 43 included in the liquid-cooling circuit 25, which are each positioned in or interacting with a part of the fluid duct 5 which is downstream (in the fluid flow) of each concerned pressurizing element 40 and 41. These liquid-fluid heat exchangers 42 and 43 are both intended for transferring heat from the pressurized fluid 2 in the concerned part of the fluid duct 5 to the liquid 27 in the corresponding part of the liquid-cooling circuit 25.

The first liquid-fluid heat exchanger 42 is included in the closed-loop liquid-cooling circuit 25 in a part of the fluid duct 5 which is in between the low pressure stage pressurizing element 38 and the high pressure stage pressurizing element 39 and which can therefore be considered as forming an intercooler 44.

The second liquid-fluid heat exchanger 43 is included in the closed-loop liquid-cooling circuit 25 in a part of the fluid duct 5 which is downstream (in the fluid flow) of the high pressure stage pressurizing element 39, which is the most downstream pressurizing element (in the fluid flow) and which can therefore be considered as forming a first aftercooler 29.

The liquid 27 in the liquid-cooling circuit 25 is flowing in counterflow with the fluid 2 in the fluid duct 5.

The first liquid-fluid heat exchanger 42 and the second liquid-fluid heat exchanger 43 are connected in series, downstream (in the liquid flow) of a device for forcing a liquid flow 26 (typically a water pump 26 when the liquid 27 is water).

The remaining part of the closed-loop liquid-cooling circuit 25 is essentially the same as in the first embodiment of figure 1. Downstream (in the liquid flow) of the series of liquid-fluid heat exchangers 42 and 43 there is first a liquid-liquid heat exchanger 30 for exchanging heat with an energy or heat consumer 30. Still further downstream in the liquid-cooling circuit 25 there is also a liquid-air heat exchanger 33 which is located in the second compartment 16 of the housing 4, which is forming an air channel 19. This liquid-air heat exchanger 33 has the same function of cooling the liquid 27 in the liquid-cooling circuit 25 before the liquid 27 is again presented to the device for forcing a liquid flow 26 or water pump 26.

The air-cooling 18 of the pressurizing device 1 of figure 2 is also provided with a fluid-air heat-exchanger 35, as was the case in figure 1, which is placed in a part 36 of the fluid duct 5 which is downstream (in the fluid flow) of the first aftercooler 29 and which is therefore again forming an additional aftercooler 37.

Apart from the two stage design, the functioning of this second embodiment of a pressurizing device 1 in accordance with the invention is essentially the same as was the case with the first embodiment of figure 1.

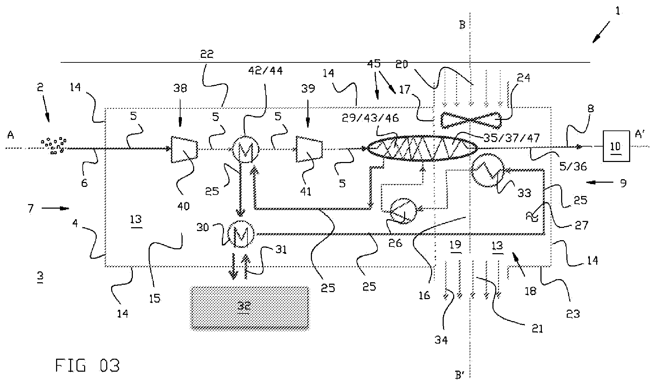

Figure 3 illustrates still another embodiment of a pressurizing device 1 in accordance with the invention which has a lot of similarities with the precedent embodiment of figure 2, since it also comprises two pressurizing stages 38 and 39.

In this third embodiment however, the pressurizing device 1 is provided with only a single aftercooler 45, which is a combined aftercooler 45. This combined aftercooler 45 comprises a first part 46, which is forming the first aftercooler 29 and which is a liquid-fluid heat exchanger 43 positioned in the first compartment 15 of the housing 4. The combined aftercooler 45 comprises also a second part 47, which is forming the additional aftercooler 37 and which is a fluid-air heat-exchanger 35 which is positioned in the air channel 19, formed by the second compartment 16 of the housing 4. The first part 46 and the second part 47 of the combined aftercooler 45 are separated from one another by or at the intermediate wall 17 of the housing 4 and this third embodiment can therefore be considered as a somewhat special case of the second embodiment wherein the liquid-fluid heat exchanger 43 and the fluid-air heat-exchanger 35 are combined in a single aftercooler 45.

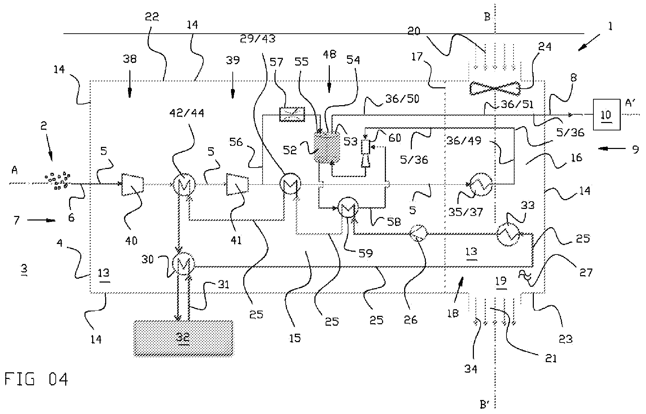

A fourth embodiment of an air-cooled pressurizing device 1 in accordance with the invention is illustrated in figure 4. This fourth embodiment is again based on the second embodiment of figure 2 and this fourth embodiment comprises also all the elements present in the second embodiment and is provided with additional elements for drying the pressurized or compressed fluid 2.

In the fourth embodiment the housing 4 also comprises a first compartment 15, which encompasses the pressurizing elements or compressor elements 40 and 41, the liquid-fluid heat exchangers 42 and 43, the liquid-liquid heat exchanger 30 and the device for forcing a liquid flow 26. In order to arrive at the postulated aim, a dryer 48 for drying pressurized fluid 2 is incorporated in this first compartment 15. This dryer 48 is drying pressurized fluid 2 in a part of the fluid duct outlet part 36 that is downstream (in the fluid flow) of the fluid-air heat exchanger 35, which is forming an additional aftercooler 37. The fluid duct outlet part 36 of the fluid duct 5 has therefor a primary section 49 which is passing through the air channel 19 formed by the second compartment 16, in which first section 49 said fluid-air heat exchanger 35 is located. This first section 49 is returning to the first compartment 15 to an intermediate section 50 of the fluid duct outlet part 36 wherein the dryer 48 is included. Finally, this intermediate section 50 is returning to the air channel 19 where it connects to a final section 51 of the fluid duct outlet part 36, which final section 51 crosses the entire air channel 19 and leaves the housing 4 at the fluid duct outlet 8.

In the embodiment represented in figure 4 the dryer 48 is a rotary drum dryer 48, which comprises a rotary drum 52 and which is drying the fluid 2 by adsorption in an adsorption means 53. The adsorption means 53 is rotating through a drying compartment 54 for drying pressurized fluid 2 by adsorption of water from the pressurized fluid 2 into the adsorption means 53 and through a regeneration compartment 55, wherein the adsorption means 53 are regenerated by desorption of water from the adsorption means 53.

For regenerating the adsorption means 53 in the regeneration compartment 55 of the rotary dryer 48, it is necessary to supply unsaturated hot fluid 2 to this regeneration compartment 55. Water accumulated in the regeneration compartment 55 during drying can be easily absorbed by the passing unsaturated hot fluid 2. To that aim, the pressurizing device 1 is provided with an ingoing fluid duct branch 56, which is connected to the fluid duct 5 in the part between the pressurizing element which is the most downstream 41(in the fluid flow) and the corresponding first aftercooler 43. This ingoing fluid duct branch 56 is extending between the fluid duct 5 and the regeneration compartment 55 of the rotary drum dryer 48 for supplying said unsaturated hot fluid 2.

A throttle valve 57 is included in the ingoing fluid duct branch 56, so that the flow rate of unsaturated hot fluid 2 supplied to the regeneration compartment 55 of the rotary drum dryer 48 can be regulated.

After having absorbed water from the absorption means 53 in the regeneration compartment 55 of the rotary drum dryer 48 the ingoing unsaturated hot fluid 2 is transformed into saturated hot fluid 2, which is leaving the regeneration compartment 55 of the rotary drum dryer 48 through an outgoing fluid duct branch 58.

In order to cool the saturated hot fluid 2 that leaves the regeneration compartment 55 of the rotary drum dryer 48, an additional liquid-fluid heat exchanger 59 is incorporated in the closed-loop liquid-cooling circuit 25 upstream of the first aftercooler 29 or 43 (in the liquid flow). In the example of figure 4, all the liquid-fluid heat exchangers 42, 43 and 49 are connected successively in series one after another. The additional liquid-fluid heat exchanger 59 is interacting with a part of the outgoing fluid duct branch 58 and is forming a regeneration cooler 59 for transfer of heat from fluid 2, i.e. saturated hot fluid 2, which is exiting the regeneration compartment 55 of the rotary drum dryer 48 to the liquid 27 in the corresponding part of the liquid-cooling circuit 25. After having passed through the regeneration cooler 59, the fluid 2 continues to flow through the outgoing fluid duct branch 58 as cold saturated fluid 2, which is to be dried in the drying compartment 54 of the rotary drum dryer 48.

To that purpose, the flow of cooled saturated fluid 2 coming from the regeneration compartment 55 of the rotary drum dryer 48 through outgoing fluid duct branch 58 and the flow of pressurized or compressed fluid 2 which leaves the fluid-air heat-exchanger 35 in the air channel 19, which is forming an additional aftercooler 37, are combined and supplied to the drying compartment 54 of the rotary drum dryer 48 through a part of the intermediate section 50 of the fluid duct outlet part 36.

For combining said flows a mixing valve 60 is provided at a T-shaped intersection of the outgoing fluid duct branch 58 and the intermediate section 50 of the fluid duct outlet part 36. The flow through the drying compartment 54 of the rotary drum dryer 48 is directed in counterflow with the flow of fluid 2 through the regeneration compartment 55 of the rotary drum dryer 48. Dried and cooled pressurized fluid 2 is leaving the rotary drum dryer 48 and is supplied to the consumer 10 of pressurized or compressed fluid 2 through the intermediate section 50 and the final section 51 of the fluid duct outlet part 36.

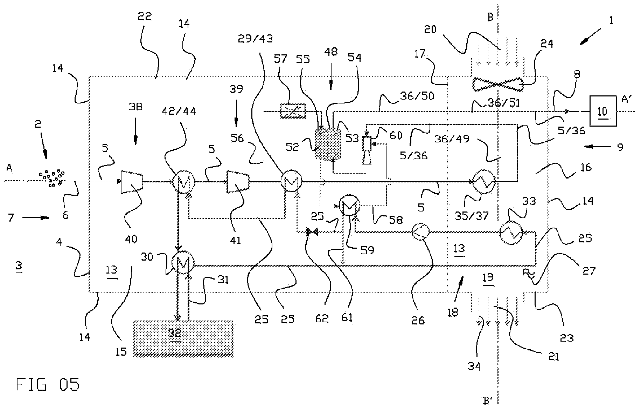

Figure 5 illustrates a fifth embodiment of a pressurizing device 1 in accordance with the invention which is a variant of the fourth embodiment. In this fifth embodiment the pressurizing device 1 is provided with a bypass pipe 61 which is bridging a part of the liquid-cooling circuit 25. In particular, this bypass pipe 61 is extending between a part of the liquid-cooling circuit 25 between the liquid-liquid heat exchanger 30 for recovery of energy and the liquid-air heat exchanger 33 which is located in the air channel 19 and a part of the liquid-cooling circuit 25 between the regeneration cooler 59 and the liquid-fluid heat exchanger 43 which is forming a first aftercooler 29.

In the embodiment of figure 5 a bypass valve 62 is provided in the part of the liquid-cooling circuit 25 between the regeneration cooler 59 and the liquid-fluid heat exchanger 43 which is forming the first aftercooler 29. In this fifth embodiment, after leaving the regeneration cooler 59, at least a part of the liquid flow is permanently returned to the air channel 19 for being cooled in the liquid-air heat exchanger 33. The more the bypass valve 62 is closed, the greater the fraction of the liquid flow that is returned through the bypass pipe 61 to the air channel 19 for cooling and the smaller the fraction of the liquid flow that is continuing in the cooling-liquid circuit 25 to the liquid-fluid heat exchangers 43 and 42.

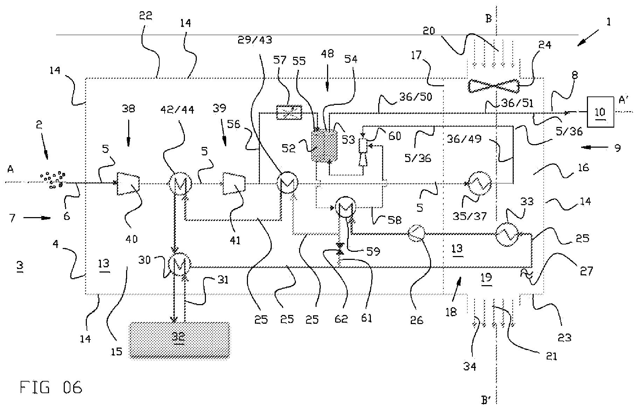

Figure 6 illustrates a sixth embodiment of a pressurizing device 1 in accordance with the invention which is still another variant of the fourth (or fifth) embodiment. The only difference with the fifth embodiment is that in the embodiment of figure 6 a bypass valve 62 is provided in the bypass pipe 61. This means that in the case the bypass valve 62 is completely closed, the entire liquid flow is continuing to flow towards the liquid-fluid heat exchangers 43 and 42 after having passed through the regeneration cooler 59, which is completely equivalent to the situation as represented in figure 4. The more the bypass valve 62 is opened, the greater the fraction of the liquid flow that is returned to air channel 19 for cooling in the liquid-air heat exchanger 33.

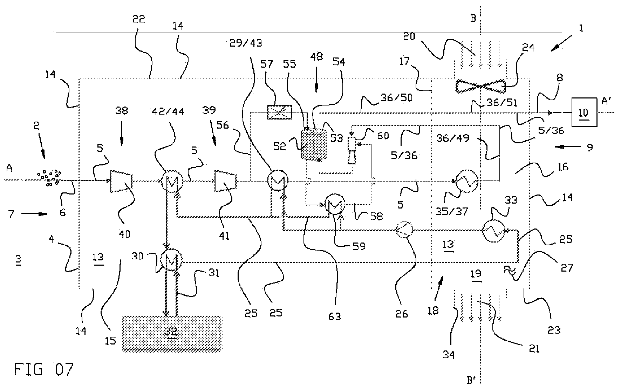

Figure 7 illustrates a seventh embodiment of a pressurizing device 1 in accordance with the invention which is different from the other embodiments with rotary drum dryer 48, i.e., from the embodiments represented in figure 4 to 6, in that the regeneration cooler 59 is in this seventh embodiment mounted in parallel over the most downstream (in the fluid flow) liquid-fluid heat exchanger 43, which is forming the first aftercooler 29. For that reason, the liquid-cooling circuit 25 is provided with a parallel liquid flow branch 63, which is connected in parallel with the part of the liquid-cooling circuit 25 that contains the first aftercooler 29. The regeneration cooler 59 is included in this parallel liquid flow branch 63.

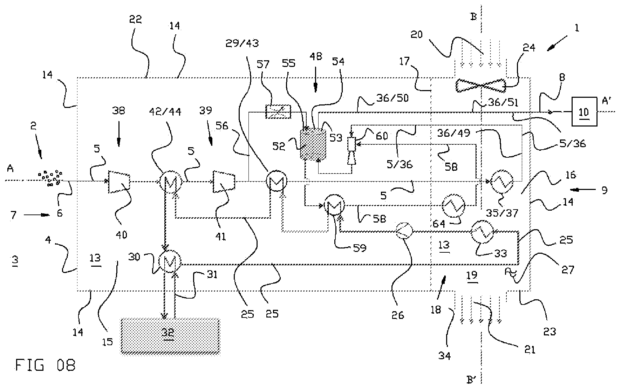

Finally, figure 8 illustrates an eight embodiment of a pressurizing device 1 in accordance with the invention, which is comprising the same elements as the fifth embodiment of a pressurizing device represented in figure 5, but wherein an additional regeneration cooler 64 is provided in the outgoing fluid duct branch 58, which is extending from the regeneration compartment 55 of the rotary drum dryer 48. This additional regeneration cooler 64 is placed downstream (in the fluid flow) of the first regeneration cooler 59 and it is an fluid-air heat exchanger 64, which is located in the air channel 19 for begin cooled by the air forced through this air channel 19 by means of the fan or ventilator 24.

The present invention is in no way limited to the embodiments of an air-cooled pressurizing device 1 as described before, but such a pressurizing device 1 can be applied and be implemented in many different ways without departure from the scope of the invention as defined by the appended claims.

## Claims

1. Air-cooled pressurizing device (1) with energy recovery compressing or pressurizing a fluid (2), comprising a housing (4), a fluid duct (5) for guiding the fluid (2) through the pressurizing device (1) from a fluid duct inlet (6) to a fluid duct outlet (8), one or more pressurizing stages (11, 38, 39) in the fluid duct (5) each comprising a pressurizing element (12, 40, 41), a device for forcing an airflow (24) in an air channel (19) through the housing (4) and a closed-loop liquid-cooling circuit (25), wherein the liquid-cooling circuit (25) comprises at least:
- a device for forcing a liquid flow (26) for circulating the liquid (27) in the closed-loop liquid-cooling circuit (25) ;
- liquid-fluid heat exchanger(s) (28, 42, 43) downstream (in the fluid flow) of each pressurizing element (12, 40, 41);
- a liquid-liquid heat exchanger (30) for recovery of energy; and,
- a liquid-air heat exchanger (33) located in the air channel (19) ;
wherein in a fluid duct outlet part (36) of the fluid duct (5) a fluid-air heat-exchanger (35) is provided in the air channel (19) for transfer of heat from pressurized fluid (2) in the fluid duct (5) to the air (34) in the air channel ( 19) *,* wherein the housing (4) comprises mainly two compartments (15, 16), a first compartment (15) in which the pressurizing element (s) ((12, 40, 41), the liquid-fluid heat exchanger(s) (28, 42, 43) and the liquid-liquid exchanger (30) are incorporated and a second compartment (16) which is forming the air channel (19) in which the liquid-air heat exchanger (33) and the fluid-air heat exchanger (35) are installed.

2. Air-cooled pressurizing device (1) according to claim 1, **characterized in that** it is a compressor device (1) comprising one or more pressurizing elements (12, 40, 41) which are compressor elements (12, 40, 41).

3. Air-cooled pressurizing device (1) according to claim 1 or 2, **characterized in that** the device for forcing an airflow (24) is a single fan or ventilator (24) and that the liquid (27) in the liquid-cooling circuit (27) is water (27) and that the device for forcing a liquid flow (26) for circulating the liquid (27) in the closed-loop liquid-cooling circuit (25) is a water pump (26).

4. Air-cooled pressurizing device (1) according to one or more of the preceding claims, **characterized in that** the pressurizing device (1) comprises only a single pressurizing stage (11), which comprises a single liquid-fluid heat exchanger (28) in the closed-loop liquid-cooling circuit (25) which is placed in or interacting with a part of the fluid duct (5) which is downstream (in the fluid flow) of the single pressurizing element (28) and which is forming a first aftercooler (29), wherein the fluid-air heat-exchanger (35) is placed in a part of the fluid duct (5) which is downstream (in the fluid flow) of the first aftercooler (29) and is forming an additional aftercooler (37).

5. Air-cooled pressurizing device (1) according to any of claims 1 to 3, **characterized in that** the pressurizing device comprises two pressurizing stages (38, 39), respectively a low pressure stage (38) with a low pressure stage pressurizing element (40) and a high pressure stage (39) with a high pressure stage pressurizing element (41), which comprises a first liquid-fluid heat exchanger (42) in the closed-loop liquid-cooling circuit (25) which is placed in or interacting with a part of the fluid duct (5) which is in between the low pressure stage pressurizing element (40) and the high pressure stage pressurizing element (41) and which is forming an intercooler (44), and which comprises a second liquid-fluid heat exchanger (43) in the closed-loop liquid-cooling circuit (25) which is placed in or interacting with a part of the fluid duct (5) which is downstream (in the fluid flow) of the high pressure stage pressurizing element (41) and which is forming a first aftercooler (29), wherein the fluid-air heat-exchanger (35) is placed in a part (36) of the fluid duct (5) which is downstream (in the fluid flow) of the first aftercooler (29) and which is forming an additional aftercooler (37).

6. Air-cooled pressurizing device (1) according to claim 4 or 5, **characterized in that** the pressurizing device (1) is provided with a single aftercooler which is a combined aftercooler (45), comprising a first part (46) which is forming the first aftercooler (29), which is a liquid-fluid heat exchanger (43) positioned in a first compartment (15) of the housing (4), and a second part (47) which is forming the additional aftercooler (37) and which is a fluid-air heat-exchanger (35) positioned in the air channel (19) formed by a second compartment of the housing (16).

7. Air-cooled pressurizing device (1) according to one or more of the preceding claims, **characterized in that** the housing comprises a first compartment (15) in which the pressurizing elements (40, 41) and the liquid-fluid heat exchangers (42, 43) and the liquid-liquid heat exchanger (30) are incorporated and **in that** a dryer (48) for drying pressurized fluid (2) is incorporated in the first compartment (15), which is drying pressurized fluid (2) in a part (50) of the fluid duct outlet part (36) that is downstream (in the fluid flow) of the fluid-air heat exchanger (35).

8. Air-cooled pressurizing device (1) according to claim 7, **characterized in that** the dryer (48) is a rotary drum dryer (48) configured to dry the fluid (2) by adsorption in an adsorption means (53), wherein the adsorption means (53) is configured to rotate through a drying compartment (54) for drying pressurized fluid (2) by adsorption of water from the pressurized fluid (2) into the adsorption means (53) and through a regeneration compartment (55) wherein the adsorption means (53) are regenerated by desorption of water from the adsorption means (53).

9. Air-cooled pressurizing device (1) according to claim 8, **characterized in that** the pressurizing device (1) is provided with an ingoing fluid duct branch (56) which is connected to the fluid duct (5) in the part between the pressurizing element (41) which is the most downstream (in the fluid flow) and the corresponding first aftercooler (29) and which is extending between the fluid duct (5) and the regeneration compartment (55) of the rotary drum dryer (48) for supplying unsaturated hot fluid (2) to the regeneration compartment (55).

10. Air-cooled pressurizing device (1) according to claim 9, **characterized in that** an additional liquid-fluid heat exchanger (59) is incorporated in the closed-loop liquid-cooling circuit (25) upstream (in the liquid flow) of the first aftercooler (29), which is forming a regeneration cooler (59) for transfer of heat from fluid (2) which is exiting the regeneration compartment (55) of the rotary drum dryer (48) to the liquid (27) in the corresponding part of the liquid-cooling circuit (25).

11. Air-cooled pressurizing device (1) according to claim 10, **characterized in that** a flow of cooled fluid (2) from the regeneration compartment (55) of the rotary drum dryer (48) which is flowing through an outgoing fluid duct branch (58) and a flow of fluid (2) from the fluid-air heat-exchanger (35) in the air channel (19), which is forming an additional aftercooler (37), which flow is flowing through a first section (49) of the fluid duct outlet part (36), are combined at a T-shaped intersection of the outgoing fluid duct branch (58) and a section (50) of the fluid duct outlet part (36) and supplied to the drying compartment (54) of the rotary drum dryer (48) in counterflow with a flow of fluid (2) through the regeneration compartment (55) of the rotary drum dryer (48) .

12. Air-cooled pressurizing device (1) according to claim 10 or 11, **characterized in that** the pressurizing device (1) is provided with a bypass pipe (61) which is bridging a part of the liquid-cooling circuit (25) and which bypass pipe (61) is extending between a part of the liquid-cooling circuit (25) between the liquid-liquid heat exchanger (30) for recovery of energy and the liquid-air heat exchanger (33) which is located in the air channel (19) and a part of the liquid-cooling circuit (25) between the regeneration cooler (59) and the liquid-fluid heat exchanger (43) which is forming a first aftercooler (29).

13. Air-cooled pressurizing device (1) according to claim 12, **characterized in that** a bypass valve (62) is provided in the bypass pipe (61) or in the part of the liquid-cooling circuit (25) between the regeneration cooler (59) and the liquid-fluid heat exchanger (43) which is forming a first aftercooler (29).

14. Air-cooled pressurizing device (1) according to one or more of claims 10 to 13, **characterized in that** the liquid-cooling circuit (25) is provided with a parallel liquid flow branch (63) which is connected in parallel with the part of the liquid-cooling circuit (25) that contains the first aftercooler (29) and wherein the regeneration cooler (59) is included in this parallel liquid flow branch (63).

## Patentansprüche

1. Luftgekühlte Druckbeaufschlagungsvorrichtung (1) mit Energierückgewinnung, die ein Fluid (2) verdichtet oder mit Druck beaufschlagt, umfassend ein Gehäuse (4), einen Fluidkanal (5) zum Leiten des Fluids (2) durch die Druckbeaufschlagungsvorrichtung (1) von einem Fluidkanaleinlass (6) zu einem Fluidkanalauslass (8), eine oder mehrere Druckbeaufschlagungsstufen (11, 38, 39) in dem Fluidkanal (5), die jeweils ein Druckbeaufschlagungselement (12, 40, 41) umfassen, eine Vorrichtung zum Drücken eines Luftstroms (24) in einem Luftkanal (19) durch das Gehäuse (4) und einen geschlossenen Flüssigkeitskühlkreislauf (25), wobei der Flüssigkeitskühlkreislauf (25) mindestens umfasst:
- eine Vorrichtung zum Drücken eines Flüssigkeitsstroms (26) zum Umwälzen der Flüssigkeit (27) in dem geschlossenen Flüssigkeitskühlkreislauf (25);
- Flüssigkeit-Fluid-Wärmetauscher (28, 42, 43), die (in dem Fluidstrom) jedem Druckbeaufschlagungselement (12, 40, 41) nachgelagert sind;
- einen Flüssigkeit-Flüssigkeit-Wärmetauscher (30) zur Energierückgewinnung; und
- einen Flüssigkeit-Luft-Wärmetauscher (33), der in dem Luftkanal (19) angeordnet ist;
wobei in einem Fluidkanalauslassteil (36) des Fluidkanals (5) ein Fluid-Luft-Wärmetauscher (35) in dem Luftkanal (19) bereitgestellt ist zum Übertragen von Wärme aus druckbeaufschlagtem Fluid (2) in dem Fluidkanal (5) auf die Luft (34) in dem Luftkanal (19), wobei das Gehäuse (4) hauptsächlich zwei Kammern (15, 16) umfasst, eine erste Kammer (15), in der das/die Druckbeaufschlagungselement(e) (12, 40, 41), der/die Flüssigkeit-Fluid-Wärmetauscher (28, 42, 43) und der Flüssigkeit-Flüssigkeit-Wärmetauscher (30) integriert sind, und eine zweite Kammer (16), die den Luftkanal (19) bildet, in dem der Flüssigkeit-Luft-Wärmetauscher (33) und der Fluid-Luft-Wärmetauscher (35) installiert sind.

2. Luftgekühlte Druckbeaufschlagungsvorrichtung (1) nach Anspruch 1,
**dadurch gekennzeichnet, dass** sie eine Verdichtervorrichtung (1) ist, die ein oder mehrere Druckbeaufschlagungselemente (12, 40, 41) umfasst, die Verdichterelemente (12, 40, 41) sind.

3. Luftgekühlte Druckbeaufschlagungsvorrichtung (1) nach Anspruch 1 oder 2,
**dadurch gekennzeichnet, dass** die Vorrichtung zum Drücken eines Luftstroms (24) ein einziges Gebläse oder ein einziger Ventilator (24) ist und dass die Flüssigkeit (27) in dem Flüssigkeitskühlkreislauf (27) Wasser (27) ist und dass die Vorrichtung zum Drücken eines Flüssigkeitsstroms (26) zum Umwälzen der Flüssigkeit (27) in dem geschlossenen Flüssigkeitskühlkreislauf (25) eine Wasserpumpe (26) ist.

4. Luftgekühlte Druckbeaufschlagungsvorrichtung (1) nach einem oder mehreren der vorhergehenden Ansprüche, **dadurch gekennzeichnet, dass** die Druckbeaufschlagungsvorrichtung (1) nur eine einzige Druckbeaufschlagungsstufe (11) umfasst, umfassend einen einzigen Flüssigkeit-Fluid-Wärmetauscher (28) in dem geschlossenen Flüssigkeitskühlkreislauf (25), der in einem Teil des Fluidkanals (5) platziert ist oder mit diesem zusammenwirkt, der (in dem Fluidstrom) dem einzigen Druckbeaufschlagungselement (28) nachgelagert ist und der einen ersten Nachkühler (29) bildet, wobei der Fluid-Luft-Wärmetauscher (35) in einem Teil des Fluidkanals (5) platziert ist, der (in dem Fluidstrom) dem ersten Nachkühler (29) nachgelagert ist und einen zusätzlichen Nachkühler (37) bildet.

5. Luftgekühlte Druckbeaufschlagungsvorrichtung (1) nach einem der Ansprüche 1 bis 3, **dadurch gekennzeichnet, dass** die Druckbeaufschlagungsvorrichtung zwei Druckbeaufschlagungsstufen (38, 39) bzw. eine Niederdruckstufe (38) mit einem Niederdruckstufen-Druckbeaufschlagungselement (40) und eine Hochdruckstufe (39) mit einem Hochdruckstufen-Druckbeaufschlagungselement (41) umfasst, umfassend einen ersten Flüssigkeit-Fluid-Wärmetauscher (42) in dem geschlossenen Flüssigkeitskühlkreislauf (25), der in einem Teil des Fluidkanals (5) platziert ist oder mit diesem zusammenwirkt, der zwischen dem Niederdruckstufen-Druckbeaufschlagungselement (40) und dem Hochdruckstufen-Druckbeaufschlagungselement (41) platziert ist und der einen Zwischenkühler (44) bildet, und umfassend einen zweiten Flüssigkeit-Fluid-Wärmetauscher (43) in dem geschlossenen Flüssigkeitskühlkreislauf (25), der in einem Teil des Fluidkanals (5) platziert ist oder mit diesem zusammenwirkt, der dem Hochdruckstufen-Druckbeaufschlagungselement (in dem Fluidstrom) nachgelagert ist (41) und der einen ersten Nachkühler (29) bildet, wobei der Fluid-Luft-Wärmetauscher (35) in einem Teil (36) des Fluidkanals (5) platziert ist, der (in dem Fluidstrom) dem ersten Nachkühler (29) nachgelagert ist und der einen zusätzlichen Nachkühler (37) bildet.

6. Luftgekühlte Druckbeaufschlagungsvorrichtung (1) nach Anspruch 4 oder 5, **dadurch gekennzeichnet, dass** die Druckbeaufschlagungsvorrichtung (1) mit einem einzigen Nachkühler bereitgestellt wird, der ein kombinierter Nachkühler (45) ist, umfassend einen ersten Teil (46), der den ersten Nachkühler (29) bildet, der ein Flüssigkeit-Fluid-Wärmetauscher (43) ist, der in einer ersten Kammer (15) des Gehäuses (4) positioniert ist, und einen zweiten Teil (47), der den zusätzlichen Nachkühler (37) bildet und der ein Fluid-Luft-Wärmetauscher (35) ist, der in dem Luftkanal (19) positioniert ist, der durch eine zweite Kammer des Gehäuses (16) gebildet wird.

7. Luftgekühlte Druckbeaufschlagungsvorrichtung (1) nach einem oder mehreren der vorhergehenden Ansprüche, **dadurch gekennzeichnet, dass** das Gehäuse eine erste Kammer (15) umfasst, in der die Druckbeaufschlagungselemente (40, 41) und die Flüssigkeit-Fluid-Wärmetauscher (42, 43) und der Flüssigkeit-Flüssigkeit-Wärmetauscher (30) integriert sind, un**d dass** ein Trockner (48) zum Trocknen von druckbeaufschlagtem Fluid (2) in der ersten Kammer (15) integriert ist, die Druckfluid (2) in einem Teil (50) des Fluidkanalauslassteils (36) trocknet, der dem Fluid-Luft-Wärmetauscher (35) (in dem Fluidstrom) nachgelagert ist.

8. Luftgekühlte Druckbeaufschlagungsvorrichtung (1) nach Anspruch 7,
**dadurch gekennzeichnet, dass** der Trockner (48) ein Drehtrommeltrockner (48) ist, der konfiguriert ist, um das Fluid (2) durch Adsorption in einem Adsorptionsmittel (53) zu trocknen, wobei das Adsorptionsmittel (53) konfiguriert ist, um durch eine Trocknungskammer (54) zum Trocknen von druckbeaufschlagtem Fluid (2) durch Adsorption von Wasser aus dem druckbeaufschlagten Fluid (2) in das Adsorptionsmittel (53) und durch eine Regenerationskammer (55) zu rotieren, wobei das Adsorptionsmittel (53) durch Desorption von Wasser aus dem Adsorptionsmittel (53) regeneriert wird.

9. Luftgekühlte Druckbeaufschlagungsvorrichtung (1) nach Anspruch 9,
**dadurch gekennzeichnet, dass** die Druckbeaufschlagungsvorrichtung (1) mit einem eingehenden Fluidkanalzweig (56) bereitgestellt ist, der mit dem Fluidkanal (5) in dem Teil zwischen dem Druckbeaufschlagungselement (41), das (in dem Fluidstrom) am weitesten nachgelagert ist, und dem entsprechenden ersten Nachkühler (29) verbunden ist und der sich zwischen dem Fluidkanal (5) und der Regenerationskammer (55) des Drehtrommeltrockners (48) erstreckt, um der Regenerationskammer (55) ungesättigtes heißes Fluid (2) zuzuführen.

10. Luftgekühlte Druckbeaufschlagungsvorrichtung (1) nach Anspruch 9,
**dadurch gekennzeichnet, dass** ein zusätzlicher Flüssigkeit-Fluid-Wärmetauscher (59) in dem geschlossenen Flüssigkeitskühlkreislauf (25) (in dem Flüssigkeitsstrom) dem ersten Nachkühler (29) vorgelagert integriert ist, der einen Regenerationskühler (59) zum Übertragen von Wärme aus Fluid (2), das aus der Regenerationskammer (55) des Drehtrommeltrockners (48) austritt, auf die Flüssigkeit (27) in dem entsprechenden Teil des Flüssigkeitskühlkreislaufs (25) bildet.

11. Luftgekühlte Druckbeaufschlagungsvorrichtung (1) nach Anspruch 10,
**dadurch gekennzeichnet, dass** ein Strom von gekühltem Fluid (2) aus der Regenerationskammer (55) des Drehtrommeltrockners (48), der durch einen abgehenden Fluidkanalzweig (58) strömt, und ein Strom von Fluid (2) aus dem Fluid-Luft-Wärmetauscher (35) in dem Luftkanal (19), der einen zusätzlichen Nachkühler (37) bildet, wobei der Strom durch einen ersten Abschnitt (49) des Fluidkanalauslassteils (36) strömt, an einer T-förmigen Kreuzung des abgehenden Fluidkanalzweigs (58) und eines Abschnitts (50) des Fluidkanalauslassteils (36) zusammengeführt und der Trocknungskammer (54) des Drehtrommeltrockners (48) im Gegenstrom zu einem Strom von Fluid (2) durch die Regenerationskammer (55) des Drehtrommeltrockners (48) zugeführt werden.

12. Luftgekühlte Druckbeaufschlagungsvorrichtung (1) nach Anspruch 10 oder 11, **dadurch gekennzeichnet, dass** die Druckbeaufschlagungsvorrichtung (1) mit einer Bypassleitung (61) bereitgestellt ist, die einen Teil des Flüssigkeitskühlkreislaufs (25) überbrückt, und wobei sich die Bypassleitung (61) zwischen einem Teil des Flüssigkeitskühlkreislaufs (25) zwischen dem Flüssigkeit-Flüssigkeit-Wärmetauscher (30) zur Energierückgewinnung und dem Flüssigkeit-Luft-Wärmetauscher (33), der sich in dem Luftkanal (19) befindet, und einem Teil des Flüssigkeitskühlkreislaufs (25) zwischen dem Regenerationskühler (59) und dem Flüssigkeit-Fluid-Wärmetauscher (43) erstreckt, der einen ersten Nachkühler (29) bildet.

13. Luftgekühlte Druckbeaufschlagungsvorrichtung (1) nach Anspruch 12,
**dadurch gekennzeichnet, dass** ein Bypassventil (62) in der Bypassleitung (61) oder in dem Teil des Flüssigkeitskühlkreislaufs (25) zwischen dem Regenerationskühler (59) und dem Flüssigkeit-Fluid-Wärmetauscher (43) bereitgestellt ist, der einen ersten Nachkühler (29) bildet.

14. Luftgekühlte Druckbeaufschlagungsvorrichtung (1) nach einem oder mehreren der Ansprüche 10 bis 13, **dadurch gekennzeichnet, dass** der Flüssigkeitskühlkreislauf (25) mit einem parallelen Flüssigkeitsstromzweig (63) bereitgestellt ist, der zu dem Teil des Flüssigkeitskühlkreislaufs (25) parallel geschaltet ist, der den ersten Nachkühler (29) enthält, und wobei der Regenerationskühler (59) in diesem parallelen Flüssigkeitsstromzweig (63) eingeschlossen ist.

## Revendications

1. Dispositif de mise sous pression refroidi par air (1) avec récupération d'énergie pour la compression ou la mise sous pression d'un fluide (2) , comprenant un boîtier (4), un conduit de fluide (5) pour guider le fluide (2) à travers le dispositif de mise sous pression (1) depuis une entrée de conduit de fluide (6) jusqu'à une sortie de conduit de fluide (8), un ou plusieurs étages de mise sous pression (11, 38, 39) dans le conduit de fluide (5) comprenant chacun un élément de mise sous pression (12, 40, 41), un dispositif pour forcer un flux d'air (24) dans un canal d'air (19) à travers le boîtier (4) et un circuit de refroidissement par liquide en boucle fermée (25), dans lequel le circuit de refroidissement par liquide (25) comprend au moins :
- un dispositif pour forcer un flux de liquide (26) pour faire circuler le liquide (27) dans le circuit de refroidissement par liquide en boucle fermée (25) ;
- un ou plusieurs échangeurs de chaleur liquide-fluide (28, 42, 43) en aval (dans l'écoulement de fluide) de chaque élément de mise sous pression (12, 40, 41) ;
- un échangeur de chaleur liquide-liquide (30) pour la récupération d'énergie ; et,
- un échangeur de chaleur liquide-air (33) situé dans le canal d'air (19) ;
dans lequel, dans une partie de sortie de conduit de fluide (36) du conduit de fluide (5), un échangeur de chaleur fluide-air (35) est prévu dans le canal d'air (19) pour le transfert de chaleur du fluide sous pression (2) dans le conduit de fluide (5) vers l'air (34) dans le canal d'air (19), dans lequel le boîtier (4) comprend principalement deux compartiments (15, 16), un premier compartiment (15) dans lequel le ou les éléments de mise sous pression (12, 40, 41), le ou les échangeurs de chaleur liquide-fluide (28, 42, 43) et l'échangeur liquide-liquide (30) sont incorporés et un second compartiment (16) qui forme le canal d'air (19) dans lequel l'échangeur de chaleur liquide-air (33) et l'échangeur de chaleur fluide-air (35) sont installés.

2. Dispositif de mise sous pression refroidi par air (1) selon la revendication 1, **caractérisé en ce qu'**il s'agit d'un dispositif compresseur (1) comprenant un ou plusieurs éléments de mise sous pression (12, 40, 41) qui sont des éléments de compresseur (12, 40, 41).

3. Dispositif de mise sous pression refroidi par air (1) selon la revendication 1 ou 2, **caractérisé en ce que** le dispositif pour forcer un flux d'air (24) est un ventilateur unique (24) et **en ce que** le liquide (27) dans le circuit de refroidissement par liquide (27) est de l'eau (27) et **en ce que** le dispositif pour forcer un flux de liquide (26) pour faire circuler le liquide (27) dans le circuit de refroidissement par liquide en boucle fermée (25) est une pompe à eau (26).

4. Dispositif de mise sous pression refroidi par air (1) selon une ou plusieurs des revendications précédentes, **caractérisé en ce que** le dispositif de mise sous pression (1) comprend un unique étage de mise sous pression (11), qui comprend un unique échangeur de chaleur liquide-fluide (28) dans le circuit de refroidissement par liquide en boucle fermée (25) qui est placé dans ou interagissant avec une partie du conduit de fluide (5) qui est en aval (dans l'écoulement de fluide) de l'unique élément de mise sous pression (28) et qui forme un premier refroidisseur final (29), dans lequel l'échangeur de chaleur fluide-air (35) est placé dans une partie du conduit de fluide (5) qui est en aval (dans l'écoulement de fluide) du premier refroidisseur final (29) et forme un refroidisseur final supplémentaire (37).

5. Dispositif de mise sous pression refroidi par air (1) selon l'une quelconque des revendications 1 à 3, **caractérisé en ce que** le dispositif de mise sous pression comprend deux étages de mise sous pression (38, 39), respectivement un étage basse pression (38) avec un élément de mise sous pression d'étage basse pression (40) et un étage haute pression (39) avec un élément de mise sous pression d'étage haute pression (41), qui comprend un premier échangeur de chaleur liquide-fluide (42) dans le circuit de refroidissement par liquide en boucle fermée (25) qui est placé dans ou interagissant avec une partie du conduit de fluide (5) qui se trouve entre l'élément de mise sous pression d'étage basse pression (40) et l'élément de mise sous pression d'étage haute pression (41) et qui forme un refroidisseur intermédiaire (44), et qui comprend un second échangeur de chaleur liquide-fluide (43) dans le circuit de refroidissement par liquide en boucle fermée (25) qui est placé dans ou interagissant avec une partie du conduit de fluide (5) qui est en aval (dans l'écoulement de fluide) de l'élément de mise sous pression d'étage haute pression(41) et qui forme un premier refroidisseur final (29), dans lequel l'échangeur de chaleur fluide-air (35) est placé dans une partie (36) du conduit de fluide (5) qui est en aval (dans l'écoulement de fluide) du premier refroidisseur final (29) et qui forme un refroidisseur final supplémentaire (37).

6. Dispositif de mise sous pression refroidi par air (1) selon la revendication 4 ou 5, **caractérisé en ce que** le dispositif de mise sous pression (1) est pourvu d'un unique refroidisseur final qui est un refroidisseur final combiné (45), comprenant une première partie (46) qui forme le premier refroidisseur final (29), qui est un échangeur de chaleur liquide-fluide (43) positionné dans un premier compartiment (15) du boîtier (4), et une seconde partie (47) qui forme le refroidisseur final supplémentaire (37) et qui est un échangeur de chaleur fluide-air (35) positionné dans le canal d'air (19) formé par un second compartiment du boîtier (16).

7. Dispositif de mise sous pression refroidi par air (1) selon une ou plusieurs des revendications précédentes, **caractérisé en ce que** le boîtier comprend un premier compartiment (15) dans lequel les éléments de mise sous pression (40, 41) et les échangeurs de chaleur liquide-fluide (42, 43) et l'échangeur de chaleur liquide-liquide (30) sont incorporés et **en ce qu'**un sécheur (48) pour sécher le fluide sous pression (2) est incorporé dans le premier compartiment (15), lequel sèche le fluide sous pression (2) dans une partie (50) de la partie de sortie de conduit de fluide (36) qui est en aval (dans l'écoulement de fluide) de l'échangeur de chaleur fluide-air (35).

8. Dispositif de mise sous pression refroidi par air (1) selon la revendication 7, **caractérisé en ce que** le sécheur (48) est un sécheur à tambour rotatif (48) conçu pour sécher le fluide (2) par adsorption dans un moyen d'adsorption (53), dans lequel le moyen d'adsorption (53) est conçu pour tourner à travers un compartiment de séchage (54) pour sécher le fluide sous pression (2) par adsorption d'eau du fluide sous pression (2) dans le moyen d'adsorption (53) et à travers un compartiment de régénération (55) dans lequel les moyens d'adsorption (53) sont régénérés par désorption d'eau des moyens d'adsorption (53).

9. Dispositif de mise sous pression refroidi par air (1) selon la revendication 8, **caractérisé en ce que** le dispositif de mise sous pression (1) est pourvu d'une branche d'entrée de conduit de fluide (56) qui est raccordée au conduit de fluide (5) dans la partie entre l'élément de mise sous pression (41) qui est le plus en aval (dans l'écoulement de fluide) et le premier refroidisseur final correspondant (29) et qui s'étend entre le conduit de fluide (5) et le compartiment de régénération (55) du sécheur à tambour rotatif (48) pour fournir du fluide chaud non saturé (2) au compartiment de régénération (55).

10. Dispositif de mise sous pression refroidi par air (1) selon la revendication 9, **caractérisé en ce qu'**un échangeur de chaleur liquide-fluide supplémentaire (59) est incorporé dans le circuit de refroidissement par liquide en boucle fermée (25) en amont (dans l'écoulement de liquide) du premier refroidisseur final (29), qui forme un refroidisseur de régénération (59) pour le transfert de chaleur du fluide (2) qui sort du compartiment de régénération (55) du sécheur à tambour rotatif (48) vers le liquide (27) dans la partie correspondante du circuit de refroidissement par liquide (25).

11. Dispositif de mise sous pression refroidi par air (1) selon la revendication 10, **caractérisé en ce qu'**un flux de fluide refroidi (2) provenant du compartiment de régénération (55) du sécheur à tambour rotatif (48) qui s'écoule à travers une branche de sortie de conduit de fluide (58) et un flux de fluide (2) provenant de l'échangeur de chaleur fluide-air (35) dans le canal d'air (19), qui forme un refroidisseur final supplémentaire (37), lequel flux s'écoule à travers une première section (49) de la partie de sortie de conduit de fluide (36), sont combinés au niveau d'une intersection en forme de T de la branche de sortie de conduit de fluide (58) et d'une section (50) de la partie de sortie de conduit de fluide (36) et fournis au compartiment de séchage (54) du sécheur à tambour rotatif (48) à contre-courant d'un flux de fluide (2) à travers le compartiment de régénération (55) du sécheur à tambour rotatif (48).

12. Dispositif de mise sous pression refroidi par air (1) selon la revendication 10 ou 11, **caractérisé en ce que** le dispositif de mise sous pression (1) est pourvu d'un tuyau de dérivation (61) qui contourne une partie du circuit de refroidissement par liquide (25) et lequel tuyau de dérivation (61) s'étend entre une partie du circuit de refroidissement par liquide (25) entre l'échangeur de chaleur liquide-liquide (30) pour la récupération d'énergie et l'échangeur de chaleur liquide-air (33) qui est situé dans le canal d'air (19) et une partie du circuit de refroidissement par liquide (25) entre le refroidisseur de régénération (59) et l'échangeur de chaleur liquide-fluide (43) qui forme un premier refroidisseur final (29).

13. Dispositif de mise sous pression refroidi par air (1) selon la revendication 12, **caractérisé en ce qu'**une vanne de dérivation (62) est pourvue dans le tuyau de dérivation (61) ou dans la partie du circuit de refroidissement par liquide (25) entre le refroidisseur de régénération (59) et l'échangeur de chaleur liquide-fluide (43) qui forme un premier refroidisseur final (29).

14. Dispositif de mise sous pression refroidi par air (1) selon une ou plusieurs des revendications 10 à 13, **caractérisé en ce que** le circuit de refroidissement par liquide (25) est pourvu d'une branche d'écoulement de liquide parallèle (63) qui est raccordée en parallèle avec la partie du circuit de refroidissement par liquide (25) qui contient le premier refroidisseur final (29) et dans lequel le refroidisseur de régénération (59) est inclus dans cette branche d'écoulement de liquide parallèle (63).
